# EUROPEAN PATENT APPLICATION

(11) **EP 4 414 076 A1**
(43) Date of publication of application: **14.08.2024**
(21) Application number: 24156140.6
(22) Date of filing: 06.02.2024
(51) Int. Cl.: B01L 3/00, G02B 21/34

(54) **BIOLOGICAL SAMPLE TESTING DEVICE, SYSTEMS, AND METHODS**

(30) Priority: 07.02.2023 US 202363443969 P; 12.12.2023 TW 112148305
(71) Applicant: Bonraybio Co., Ltd., Taichung City 41280 (TW)
(72) Inventor: HSU, Cheng-Teng, 41280 Taichung City (TW); LIN, Bo-Lu, 41280 Taichung City (TW); CHANG, Hui-Chen, 41280 Taichung City (TW)
(74) Representative: Keltie LLP

(57) **Abstract**

Biological sample testing devices, and associated systems and methods, are disclosed herein. In some embodiments, the biological sample testing device includes a slide, a spacer layer carried by the slide, and a cover slip carried by the slide over the spacer layer. The spacer layer includes one or more wells, each of which extend horizontally along a first axis from an inlet at a first side of the biological sample testing device to an outlet at a second side of the biological sample testing device opposite the first side. Each well is defined by a set of curved sidewalls that extend from the inlet to the outlet. Further, the set of curved sidewalls define an asymmetric shape for the well about a second axis perpendicular to the first axis. The shape manages a flow of a biological sample to reduce a chance of bubbling within the well.

## Description

### CROSS-REFERENCE TO RELATED APPLICATIONS

This application claims priority to U.S. Provisional Patent Application No. 63/443,969, filed on February 7, 2023, and Taiwanese Utility Application No. 112148305 filed on December 12, 2023, the entireties of each of which are incorporated herein by reference.

### TECHNICAL FIELD

The present invention relates to a medical testing tool and, more particularly, to a biological sample testing device with a horizontal well for receiving a biological specimen.

### BACKGROUND

### Description of Related Art

Referring to FIG. 1, an existing biological sample (e.g., sperm) testing device 100 (US Design Patent No. D566849 S) includes a microscope slide 110 ("the slide 110"), a spacer layer 120, and a cover slip 140. The spacer layer 120 has a plurality of ribs 122, and the ribs 122 define two counting chambers 124. Each counting chamber 124 has a suction opening 126, a cavity 130 in communication with the suction opening 126, and a vent 128 in communication with the cavity 130. Each cavity 130 has a front section 132 in communication with, and located on an inner side of, the corresponding suction opening 126, a middle section 134 in communication with the front section 132, and a rear section 136 between the middle section 134 and the corresponding vent 128. Each front section 132 is defined by a pair of first slanting surfaces 133 (wherein the term "slanting" refers to a planar arrangement of slanting with respect to a spreading direction extending through the corresponding suction opening 126 and the corresponding vent 128), each middle section 134 is defined by a pair of straight surfaces 135 (wherein the term "straight" refers to a planar arrangement of being substantially parallel to the spreading direction), and each rear section 136 is defined by a pair of second slanting surfaces 138. Each straight surface 135 is connected to the corresponding first slanting surface 133 at a first vertex (e.g., at a defined angle, sometimes also referred to herein as a hard inflection point) and is connected to the corresponding second slanting surface 137 at a second vertex.

When a biological sample 1 is transferred, in the form of a liquid drop, to the suction opening 126 of one of the counting chambers 124, the biological sample 1 automatically spreads, or flows, toward the corresponding vent 128 by a capillary action. During the process, the portion of the biological sample that is in contact with and moves along the two lateral sides (i.e., the first slanting surfaces 133, the straight surfaces 135, and the second slanting surfaces 137) of the corresponding cavity 130 produces a wetting effect and therefore spreads, or flows, faster than the portion of the biological sample 1 that is in the middle of the corresponding cavity 130. In the end, however, the relatively slow-moving middle portion of the biological sample will spread ahead of the portion of the biological sample that is in contact with and moves along the two lateral sides (i.e., the first slanting surfaces 133, the straight surfaces 135, and the second slanting surfaces 137) of the corresponding cavity 130 for the following two reasons. First, the spreading path of the portion of the biological sample that is in contact with and moves along the two lateral sides (i.e., the first slanting surfaces 133, the straight surfaces 135, and the second slanting surfaces 137) of the corresponding cavity 130 is longer than the spreading path of the middle portion of the biological sample. Second, with each straight surface 135 to the corresponding first and second slanting surfaces 133 and 137 at vertices (e.g., at hard inflection points such that the straight surface is connected to the first and second slanting surfaces 133 and 137 at an angled interface), the spreading path along the lateral sides has two angled deflecting structures. As a result, the portion of the biological sample that is in contact with and moves along the two lateral sides of the corresponding cavity 130 is paused while being deflected and/or experiences collisions in the deflection. As a result, for example, a vacuum bubble 2 is formed on each corresponding second slanting surface 137 at a position adjacent to the corresponding vent 128, thereby causing a testing error for the sample. Further, the collisions can destroy information in the biological sample 1.

### SUMMARY

According to a first aspect, the invention provides a biological sample testing device, comprising:
a slide having a top side;
a cover slip carried by the top side of the slide; and
a spacer layer carried by the top side of the slide and positioned between the top side and the cover slip, wherein the spacer layer includes a well extending horizontally along a first axis from an inlet at a first side of the biological sample testing device to an outlet at a second side of the biological sample testing device opposite the first side, wherein the well is defined by a set of curved sidewalls extending between the inlet and the outlet, and wherein the set of curved sidewalls define an asymmetric shape about a second axis perpendicular to the first axis.

### BRIEF DESCRIPTION OF THE DRAWINGS

The aforesaid and other features and effects of the disclosed techniques will be better understood by referring to the following detailed description in conjunction with the accompanying drawings, in which:
FIG. 1 is a plan view of a typical biological sample testing device.
FIG. 2 is an assembled perspective view of a biological sample testing device according to some embodiments of the present disclosure.
FIG. 3 is an exploded perspective view of a biological sample testing device according to some embodiments of the present disclosure.
FIG. 4 is a partially schematic plan view of a biological sample testing device according to some embodiments of the present disclosure.
FIG. 5 is a cross-sectional view of the biological sample testing device taken along line V-V in FIG. 4.
FIGS. 6A-6F are partially schematic top views illustrating the spread of a biological sample into a well of a biological sample testing device in accordance with some embodiments of the present disclosure.

The drawings have not necessarily been drawn to scale. Similarly, some components and/or operations can be separated into different blocks or combined into a single block for the purpose of discussing of some of the implementations of the present disclosure. Moreover, while the disclosed techniques are amenable to various modifications and alternative forms, specific implementations have been shown by way of example in the drawings and are described in detail below. The intention, however, is not to limit the invention to the particular implementations described

### DETAILED DESCRIPTION

### Overview

Biological sample testing devices, associated systems, and methods, are disclosed herein. The biological sample testing devices (sometimes also referred to herein as "biological sample testing slides," "slides for testing biological samples," "test slides," and/or the like) include a slide backing, a spacer layer carried by the slide backing, and a cover slip carried by the slide backing. The spacer layer includes a well extending along a horizontal axis from an inlet in the spacer layer to an outlet in the spacer layer. The well is defined by a set of sidewalls that are curved between guide surfaces (e.g., at curved inflection points, rather than at vertices/hard inflection points) that are shaped to shaped to control a speed of a biological sample within the well. More specifically, the well is shaped to control a speed of the biological sample so that a portion of the biological sample flowing into the well (e.g., from the inlet toward the outlet) along the sidewalls arrives at the outlet at generally the same time (e.g., generally simultaneously) as a portion of the biological sample flowing into the well directly between the inlet and outlet (e.g., along a center longitudinal axis of the well). As a result, the shape of the well can reduce (or even eliminate) the chance that bubbles form within the biological sample within the well, thereby improving the chances that the biological sample testing devices can be used to analyze a DNA sample therein. Additionally, or alternatively, the shape of the well and curved inflection points in the sidewalls can reduce (or minimize) the number of impacts between different flow paths of the biological sample and/or between the biological sample and the sidewalls. As a result, the shape of the well and curved inflection points can help reduce (or even eliminate) DNA-destroying collisions as the biological sample flows into the well. Additional details on the biological sample testing devices are discussed in more detail below.

For ease of reference, the biological testing sample device and components thereof are sometimes described herein with reference to top and bottom, upper and lower, upwards and downwards, and/or horizontal plane, x-y plane, vertical, or z-direction relative to the spatial orientation of the embodiments shown in the figures. It is to be understood, however, that the biological testing sample device can be moved to, and used in, different spatial orientations without changing the structure and/or function of the disclosed embodiments of the present disclosure.

Further, although primarily discussed herein as a biological testing sample device for collecting and analyzing semen samples, one of skill in the art will understand that the scope of the invention is not so limited. For example, the biological testing sample device can also be used to collect various other biological fluids with relatively sensitive DNA samples. Accordingly, the scope of the invention is not confined to any subset of embodiments and is confined only by the limitations set out in the appended claims.

In some embodiments, the biological sample testing device includes a slide that has a top side, as well as a spacer layer and a cover slip each carried by the top side. The spacer layer is positioned between the top side and the cover slip and includes one or more wells each extending horizontally along a first axis from an inlet at a first side of the biological sample testing device to an outlet at a second side of the biological sample testing device opposite the first side. The well(s) are defined by a set of curved sidewalls extending between the inlet and the outlet. Further, the set of curved sidewalls ("sidewalls") defines an asymmetric shape for the well(s) about a second axis perpendicular to the first axis. In some embodiments, the sidewalls define a shape for the well(s) that is symmetric about the first axis. As discussed in more detail below, inflection points of the sidewalls and the shape of the well(s) can help control a speed of various portions of a biological sample flowing into the well(s) to reduce the chance that bubbles form within the well(s) and/or reduce the chance that collisions within the biological sample destroy (e.g., damage, break apart, disrupt, and/or otherwise render non-usable) DNA information in the biological sample.

For example, each of the well(s) provides a first travel path from the inlet to the outlet adjacent to the set of sidewalls and a second travel path from the inlet to the outlet along a line between the inlet and the outlet (e.g., extending directly along the first axis). The well(s) can be shaped to control a speed of a biological sample moving from the inlet to the outlet so that a first portion of the biological sample moving along the first travel path arrives at the outlet at generally the same time as a second portion of the biological sample moving along the second travel path. Said another way, the well(s) can be shaped to control a wetting phenomenon between a biological sample inserted through the inlet and the spacer material to cause a first portion of the biological sample flowing adjacent to the set of sidewalls to reach the outlet at generally the same time as a second portion of the biological sample flowing directly between the inlet and the outlet.

In some embodiments, the well(s) each include a front section downstream from the inlet, a middle section downstream from the front section, and a rear section downstream from the middle section. In some embodiments, based on the asymmetric shape, the rear section has a larger aperture than the front section. In some embodiments, the front section is shaped to accelerate a first portion of a biological sample injected into the inlet that is moving adjacent to the set of sidewalls relative to a second portion of the biological sample moving directly between the inlet and the outlet (e.g., flowing directly along the first axis). In some such embodiments, the rear section is shaped to decelerate the first portion of the biological sample relative to the second portion of the biological sample. In some embodiments, the set of curved sidewalls includes a first portion between the inlet and the front section and having a first convex profile, a second portion between the front section and the middle section and having a first concave profile, a third portion between the middle section and the rear section and having a second concave profile, and a fourth portion between the rear section and the outlet and having a second convex profile. In some such embodiments, the first concave profile has a first radius of curvature while the second concave profile has a second radius of curvature smaller than the first radius of curvature. Additionally, or alternatively, the first convex profile can have a first radius of curvature while the second convex profile has a second radius of curvature different from the first radius of curvature. In some embodiments, the set of curved sidewalls includes a first pair of guide surfaces at the front section that are positioned at a first angle to each other and a second pair of guide surfaces at the rear section that is positioned at a second angle to each other. The second angle is larger than the first angle. For example, the first angle can be between 90 and 110 degrees while the second angle is between 140 and 180 degrees.

In some embodiments, the inlet is at least partially defined by a pair of guide surfaces at a non-zero angle with respect to each other. In such embodiments, the non-zero angle can help accelerate a biological sample input into the well toward the set of sidewalls in the well. In some embodiments, the outlet is at least partially defined by a pair of guide surfaces that are at a non-zero angle with respect to each other. In such embodiments, the non-zero angle can help decelerate a biological sample input into the well via a damping effect at the outlet.

In some embodiments, the set of curved sidewalls defines an apple-shaped perimeter for the well(s). In some embodiments, the set of curved sidewalls defines a tear-shaped perimeter for the well.

In some embodiments, the biological sample testing device includes a microscope slide (hereinafter referred to as the slide for short), a spacer layer, and a cover slip. The slide includes a top side. The spacer layer is provided on the top side and includes a suction opening, a cavity in communication with the suction opening, and a vent in communication with the cavity. The vent and the suction opening are provided opposite each other along a spreading direction. The cavity has a front section in communication with the suction opening and located on an inner side of the suction opening along the spreading direction, a middle section in communication with the front section and located on an inner side of the front section along the spreading direction, and a rear section between the middle section and the vent. The front section is defined by a pair of first guide surfaces. The first guide surfaces are provided opposite each other and spaced apart along a transverse direction perpendicular to the spreading direction. Each first guide surface has a first concave curve and a first guiding section extending from the first concave curve toward the suction opening. The first guiding sections are a pair of divergent slanting surfaces (wherein the term "slanting" refers to a planar arrangement of slanting with respect to the spreading direction), and the first guiding sections form a first angle therebetween. The rear section is defined by a pair of second guide surfaces. The second guide surfaces are provided opposite each other and spaced apart along the transverse direction. Each second guide surface has a second concave curve and a second guiding section extending from the second concave curve toward the vent. The second guiding sections form a second angle therebetween. The second angle is larger than the first angle, and the second angle is in the range from 140 degrees to 180 degrees. The cover slip is provided on the spacer layer so as to be spaced apart from the slide while closing the cavity.

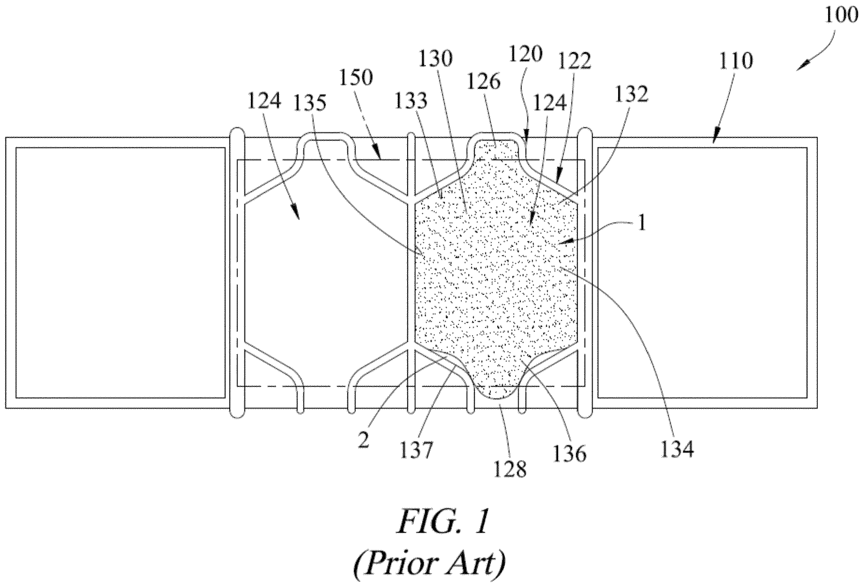

In many of the embodiments discussed above, the shape of the well can reduce the chance that bubbles form within the well as a biological sample is inserted into the well. For example, with each first guide surface having the first concave curve and the first guiding section extending from the first concave curve toward the suction opening, a biological sample provided to the suction opening will not be paused and/or deflected by the vertices on the two lateral sides of the cavity. Instead, the biological sample can spread smoothly along the two lateral sides of the cavity to prevent the middle portion of the biological sample from spreading so far ahead of the portion of the biological sample that moves along the two lateral sides of the cavity (e.g., the lateral portions) that the middle portion spills out of the vent before the lateral portions reach the vent, thereby causing bubbles to form. Additionally, or alternatively, the biological sample is kept from forming a bubble (e.g., a gas pocket) at an inflection, such as described above with respect to FIG. 1 at each second slanting surface 506' at a position adjacent to the vent 503. Additionally, or alternatively, with each second guide surface having the second concave curve and the second guiding section extending from the second concave curve toward the vent, the lateral portions will be effectively brought together (i.e., to the center) in advance to further reduce the flow speed of the portion of the biological sample that is in the middle of the cavity and already slower than the portion of the biological sample that moves along the two lateral sides of the cavity, the objective being for the convergence of the portion of the biological sample that moves along the two lateral sides of the cavity to produce a damping effect on the middle portion of the biological sample, lest the two portions of the biological sample collide and cause breakage of the DNA in the cells in the biological sample, and lest a vacuum bubble be formed on each of the two lateral sides of the cavity as may otherwise occur if the middle portion of the biological sample flows to the vent sooner than the portion of the biological sample that moves along the two lateral sides of the cavity.

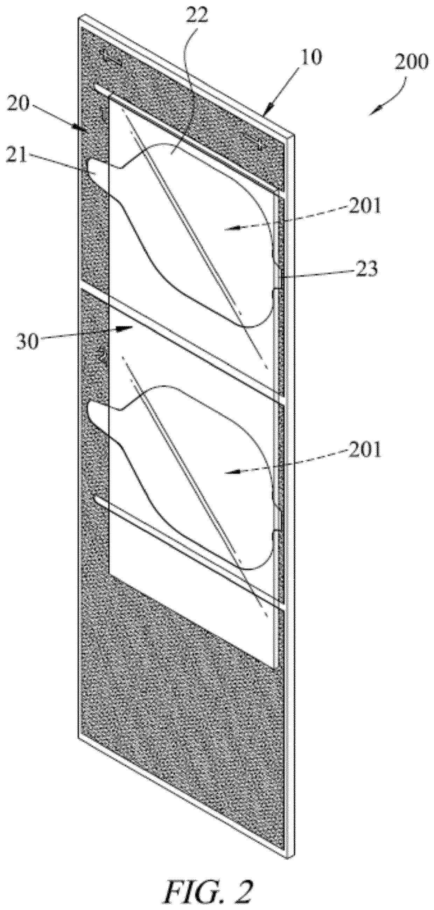

Additional details on the shape of the well, benefits thereof, and related systems and methods are discussed below with respect to the description of FIGS. 2-6F.

### Description of the Figures

FIGS. 2-4 are an assembled perspective view, an exploded view, and a partially schematic top view, respectively, of a biological sample testing device 200 according to some embodiments of the present disclosure. As illustrated in FIGS. 2-4, the biological sample testing device 200 includes a microscope slide 10, a spacer layer 20, and a cover slip 30. The microscope slide 10 ("the slide 10," sometimes also referred to herein as a "slide backing," a "bottom layer," and/or the like) can be a piece of float glass and/or any other suitable material. The slide 10 includes a top surface 11 that carries the spacer layer 20 (sometimes also referred to herein as a "well layer") and the cover slip 30 (sometimes also referred to herein as a "cover," a "top slide," and/or the like).

The spacer layer 20 (sometimes also referred to herein as a "well layer") can be made of an ultrahydrophobic material such as an oil-based paint, a fluorine-containing polyester, a polyurethane, an acrylic resin, a mixture of the above, and/or any other suitable material. The top side 11 of the slide 10 can be coated with the ultrahydrophobic resin material by a screen printing process (and/or any other suitable process, such as an additive manufacturing process) and then cured (e.g., at a high temperature and/or under exposure to radiation such as ultraviolet light) and/or removed as necessary to form one or more wells 201.

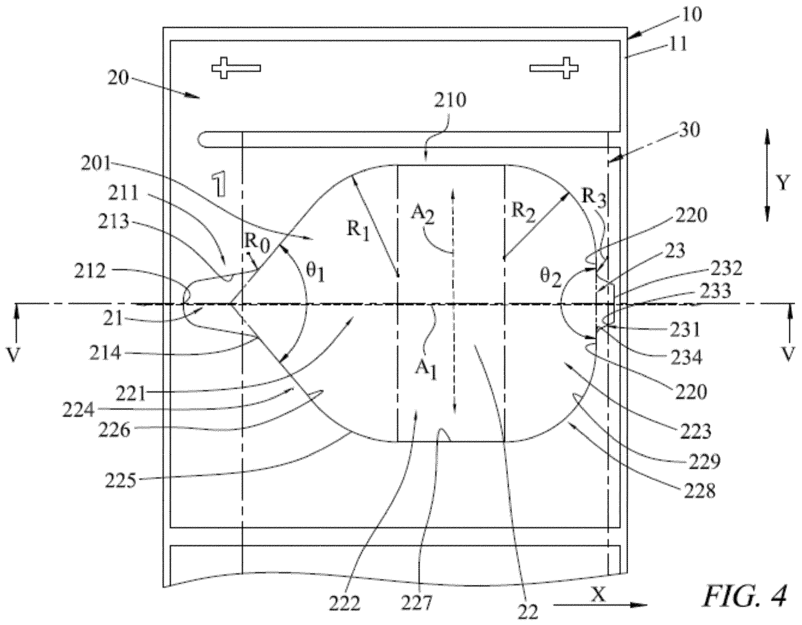

In the embodiment illustrated in FIG. 2, the spacer layer 20 includes two wells 201 that each include a cavity 22 extending from an inlet 21 at a first side of the biological sample testing device 200 to an outlet 23 on the other side of the biological sample testing device 200. Each of the wells 201 can have a depth between about 10 µm and about 20 µm. Further, each of the wells 201 is a horizontal well (e.g., as opposed to a vertical well). For purposes of discussion herein, a "horizontal well" means a well that has an inlet-outlet pair (e.g., the inlet 21 and the outlet 23) that is horizontally placed (or in a substantially coplanar manner); in comparison, a "vertical well" means a well that has at least one opening of the inlet-outlet pair being placed on a plane that is different from the plane on which the cavity sits. For example, both the inlet 21 (sometimes also referred to herein as an "opening," a "suction opening," and/or the like) and the outlet 23 (sometimes also referred to herein as a "vent," a "relief opening," and/or the like) are coplanar with the cavity 22, rather than positioned above and/or below the cavity 22. Further, the cover slip 30 has a width that is narrower than each of the wells 201 such that the inlet 21 and the outlet 23 are exposed on opposing sides of the cover slip 30, rather than requiring openings to be formed in the cover sheet and properly aligned with the wells 201. For each of these reasons, horizontal wells can be easier and more cost-effective to manufacture. Further, horizontal wells of the type illustrated in FIG. 2 can reduce the risk of DNA corruption in a biological sample because fluid flows horizontally to fill the well rather than vertically. Additional details on the shape of the wells 201 are discussed in more detail below with respect to FIG. 4.

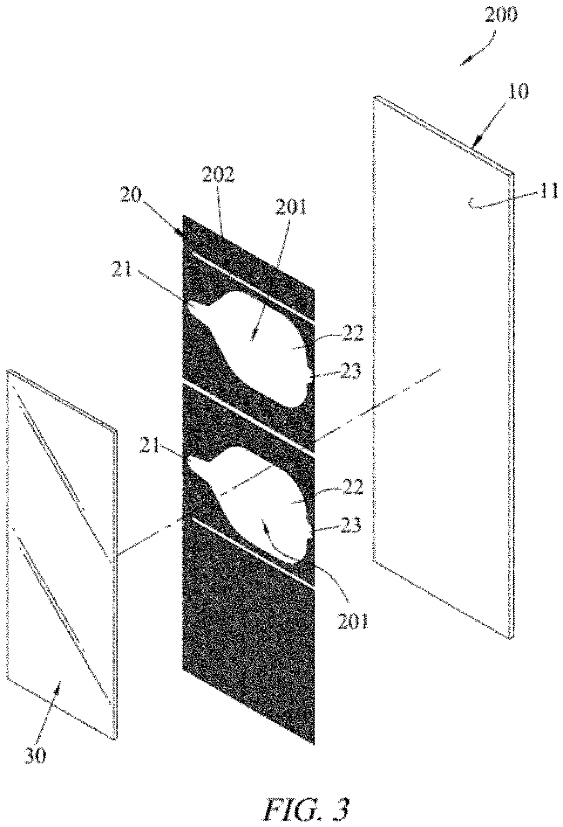

As illustrated in the exploded view of FIG. 3, the cover slip 30 can be made of float glass and is provided on the spacer layer 20 so as to be spaced apart from the slide 10 while closing a top of the cavities 22. In some embodiments, the cover slip 30 (sometimes also referred to herein as a "cover sheet," a "top slide," and/or the like) is adhesively bonded to the spacer layer 20 through a glue layer (e.g., highly transparent UV-cured adhesive) between the spacer layer 20 and the cover slip 30 (not shown). Additionally, or alternatively, as illustrated in FIG. 3, the spacer layer 20 can be formed with a plurality of adhesive application grooves 202 for receiving an adhesive. The adhesive can then be applied to the top surface 11 of the slide 10 through the adhesive application grooves 202 (e.g., by screen printing, adhesive dispensing, and/or any other suitable process), thereby allowing the cover slip 30 to be adhesively bonded to the slide 10 directly in addition to (or alternatively to) an upper surface of the spacer layer 20. The direct bond between the cover slip 30 and the slide 10 can help enhance a secureness of the cover slip 30 to help seal each of the wells 201, thereby helping prevent contamination of a biological sample therein. In some embodiments, the thickness of the spacer layer 20 ranges between about 10 microns (µm) and about 20 µm.

As illustrated in the partially schematic top view of FIG. 4, each of the wells 201 (one illustrated in FIG. 4, referred to as "the well 201" in the description of FIG. 4), is defined by a set of curved sidewalls 210 extending around a perimeter of the well 201. The set of curved sidewalls 210 ("sidewalls 210," e.g., left and right sidewalls) are continuous (or generally continuous) with each other and define a shape that helps manage a speed of a biological sample flowing into the well 201 generally in a motion path X (e.g., from the inlet 21 toward the outlet 23 along a first axis A₁) and reduce the likelihood that bubbles will form during the spreading process. For example, as discussed in more detail below, the sidewalls 210 each include a plurality of guide surfaces that meet at curved inflection points between various sections of the well 201. That is, the sidewalls 210 do not include any vertices (e.g., hard inflection points where guide surfaces meet at an angled interface). The curved inflection points can eliminate (or reduce) the number of deflections and/or reflections the biological sample undergoes while flowing into the well 201. In turn, the reduction can help reduce the chance bubbles form within the well 201 and/or help reduce collisions (e.g., between different portions of the biological sample, between the biological sample and the sidewalls 210, and/or the like) that can otherwise destroy DNA information.

Further, the cavity 22 has a front section 221 fluidly coupled to and downstream from the inlet 21 with respect to the spreading direction X, a middle section 222 fluidly coupled to and downstream from the front section 221 with respect to the spreading direction X, and a rear section 223 fluidly coupled to and downstream from the middle section 222 with respect to the spreading direction X. The rear section is fluidly coupled to and upstream from the outlet 23 with respect to the spreading direction X. Said another way, the front section 221 is fluidly coupled between the middle section 222 and the inlet 21 and the rear section 223 is fluidly coupled between the middle section 222 and the outlet 23. The sidewalls 210 around the inlet 21, each section of the cavity 22, and the outlet 23 define a shape that is configured to control a wetting effect of the biological sample while flowing into the well 201. As a result, the sidewalls 210 can help control a flow rate of the biological sample and/or ensure that the portions of the biological sample flowing adjacent to the sidewalls 210 (sometimes referred to herein as "lateral portions," "side portions" and/or the like) reaches the outlet 23 at generally the same time as a portion of the biological sample flowing through a center of the well 201 (e.g., directly between the inlet 21 and the outlet 23, sometimes referred to herein as a "middle potion," a "central portion," and/or the like).

For example, as illustrated in FIG 4, each of the inlets 21 is defined by a pair of front guide surfaces 211 and an end surface 212 connected between corresponding ends of the front guide surfaces 211. The end surface 212 is curved to connect with the front guide surfaces 211 without a vertex (e.g., thereby providing a continuous surface throughout the inlet). Further, the front section 221 of the cavity 22 is defined by a pair of first guide surfaces 224 that are connected with the corresponding front guide surfaces 211 through a first guide curve 214, thereby providing a curved interface that does not include a vertex. Each of the front guide surfaces 211 has a first slanting surface section 213 that is at an angle to the first axis A₁ such that the front guide surfaces 211 grow farther apart from each other as they move farther away from the end surface 212 to reduce a curvature of the first guide curves 214. As a result, the angle of the front guide surfaces 211 can reduce a curvature of deflection for the lateral portions of the biological sample. In some embodiments, the first guide curve 214 has a radius of curvature, R₀, of about 1 millimeter (mm). Said another way, the front guide surfaces 211 are at a non-zero angle with respect to each other which helps reduce a required deflection of the biological sample as it enters the cavity 22. As a result, the non-zero angle of the front guide surfaces 211 can help accelerate the lateral portions of the biological sample to maintain contact with the sidewalls 210 and increase the speed of flow with respect to the middle portion.

The pair of first guide surfaces 224 in the front section 221 (sometimes also referred to herein as a "widening section") are provided opposite each other and are spaced apart along a transverse direction Y perpendicular to the spreading direction X. Similar to the front guide surfaces 211, the first guide surfaces 224 each include a first guiding section 226 that is positioned at an angle with respect to the first axis A₁ to expand a width of the cavity 21 downstream from the inlet 21 (and upstream from the middle section 222) with respect to the spreading direction X. Said another way, the first guiding sections 226 are positioned at an angle with respect to each other, illustrated as a first angle θ₁ in FIG. 4, to widen the cavity 22 in the transverse direction Y. A smaller angle between the first guiding sections 226 can be beneficial to, for example, reduce the degree of deflection at the first guide curves 214 and/or help shorten the travel paths for the portion of the biological sample 1 that flows along the sidewalls (e.g., to help reduce the chance the lateral portions are outrun by the middle portion). However, the angle between the first guiding sections 226 must be sufficiently large to expand the width of the cavity (e.g., along the transverse direction Y) to allow the cavity 21 to receive a large enough volume of the biological sample to accurately test the biological sample (e.g., a large enough volume to accurately determine a DNA result from the biological sample). In various embodiments, the first angle θ₁ can be between about 90 degrees and about 110 degrees. In the illustrated embodiment, the first angle θ₁ is about 99 degrees.

The middle section 222 of the cavity 22 is defined by a pair of inner surfaces 227 that are substantially parallel to the spreading direction X (and the first axis A₁). The sidewalls 210 include first concave curves 225 connecting the first guide surfaces 224 to the inner surfaces 227. Said another way, the sidewalls 210 include a first concave profile (e.g., the first concave curves 225) between the front section 221 and the middle section 222 to provide a curved, vertex-less transition between the widening profile of the front section 221 and the straight profile of the middle section 222. Similar to the discussion above, the curved transition between the front section 221 and the straight profile of the middle section 222 can help reduce (or, in some cases, eliminate) deflections and/or reflections at the inflection point. The reduction (or, in some cases, elimination), in turn, can help maintain a greater speed of the lateral portions relative to the middle portion and/or reduce (or, in some cases, eliminate) collisions that can destroy information in the biological sample. The first concave curve 225 is shaped to reduce (or minimize) an impedance the sidewalls 210 have on the flow of the lateral portions of the biological sample, thereby reducing (or minimizing) an effect on the speed of the lateral portions. For example, the first concave curve 225 can have a radius of curvature R₁ that is relatively large compared to a radius of curvature of any other inflection point in the well 201. In some embodiments, for example, the radius of curvature R₁ is about 6 mm. As a result, as discussed in more detail below, the lateral portions can catch and/or pass the middle portion while flowing adjacent to the inner surfaces 227 of the middle section 222.

The rear section 223 of the cavity 22 is defined by a pair of second guide surfaces 228. The second guide surfaces 228 each include a second guiding section 220 that is positioned at an angle with respect to the first axis A₁ to reduce a width of the cavity 21 upstream from the outlet 23 (and downstream from the middle section 222) with respect to the spreading direction X. Said another way, the second guiding sections 220 are positioned at an angle with respect to each other, illustrated as a second angle θ₂ in FIG. 4, to reduce a width of the cavity 22 in the transverse direction Y. As a result, as discussed in more detail below, the second guiding sections 220 bring the lateral portions of the biological sample toward the middle portion and the outlet 23. Further, the second guiding sections 220 are connected to the inner surfaces 227 of the middle section 222 through second concave curves 229.

Said another way, the sidewalls 210 include a second concave profile (e.g., the second concave curves 229) between the middle section 222 and the rear section 223 to provide a curved, vertex-less transition between the straight profile of the middle section 222 and the narrowing profile of the rear section 223. Similar to the discussion above, the curved transition between the straight profile of the middle section 222 and the narrowing profile of the rear section 223 can help reduce (or, in some cases, eliminate) deflections and/or reflections at the inflection point. The reduction (or, in some cases, elimination), in turn, can help reduce (or, in some cases, eliminate) collisions that can destroy information in the biological sample. In contrast to the discussion above, however, the second guiding surfaces 228 are shaped to gradually slow the lateral portions of the biological sample down with respect to the middle portion. For example, the second concave curves 229 can have a radius of curvature R₂ that is relatively small compared to a radius of curvature R₁ of the first concave curves 225. In some embodiments, for example, the radius of curvature R₂ is about 5 mm. Additionally, or alternatively, the second angle θ₂ between the second guiding sections 220 can be larger than each first angle θ₁. For example, the second angle θ₂ can be about 140 degrees and about 180 degrees. While larger angles are better, the second angle should not be more than about 180 degrees to avoid deflecting the biological sample backward with respect to the spreading direction X, which can cause bubbling and/or collisions that destroy DNA information. In the illustrated embodiment, the second angle θ₂ is about 180 degrees such that the second guiding sections 220 of the second guiding surfaces 228 are generally perpendicular to the first axis A₁ and the spreading direction X.

Further, as a result of the relatively small radius of curvature R₂ in the second concave curves 229 and/or the relatively large angle of the second angle θ₂ (e.g., resulting in a large change in direction through the second concave curves 229), the lateral portions of the biological sample can be partially decelerated in the rear section 223. As discussed in more detail below, the overall shape of the well 201 defined by the sidewalls 210 can help ensure that the lateral portions are ahead of the middle portion in the rear section. As a result, the deceleration can help ensure that the lateral portions and the middle portion reach the outlet 23 at generally the same time (e.g., generally simultaneously), thereby reducing the chance that any bubbles will be formed in the cavity 22. Additionally, or alternatively, the deceleration can help reduce forces in a collision as the lateral portions are pushed toward the middle portion. The reduction, in turn, can help reduce the chance that DNA information is destroyed in the collision to help improve a usability of the biological sample within the well 201.

One result of the different radiuses of curvature between the first and second concave curves 225, 229 and the different angles between the first and second guiding sections 226, 220, the well 201 is generally symmetrical about the first axis A₁ but generally asymmetrical about a second axis A₂ that is perpendicular to the first axis A₁ (e.g., and generally parallel to the transverse direction Y). The symmetry in the shape about the first axis A₁ can help ensure that the lateral portions of the biological sample flow at generally the same speed. In contrast, the asymmetry in the shape about the second axis A₂ can help control a speed of the lateral portions relative to the middle portion. For example, as discussed above, the front section 221 of the cavity 22 is shaped to help accelerate (or maintain a relatively high) speed the lateral portions relative to the middle portion. As a result, the lateral portions can cover their longer travel path (e.g., tracing the sidewalls 210) in the same time the middle portion covers a shorter travel path (e.g., directly between the inlet 21 and the outlet 23). In contrast, as also discussed above, the rear section 223 of the cavity 22 is shaped to decelerate the lateral portions and/or control a timing of the arrival of the lateral portions at the outlet 23. As a result, the rear section 223 can help reduce (or, in some cases, eliminate) an impact of collisions as the lateral portions rejoin the middle portion and/or can help reduce the chance that bubbles are formed at the inflection points near the outlet 23.

As further illustrated in FIG. 4, the outlet 23 is defined by a pair of rear guide surfaces 231 and a terminal end 232. Similar to the front guide surfaces 211, the rear guide surfaces 231 each include a second slanting surface section 233 and a second guide curve 234 connecting the second slanting surface section 233 to the second guiding surfaces 228 of the rear section 223. The second guide curves 234 provide a curved, vertex-less inflection point between the cavity 22 and the outlet 23 to help reduce (or eliminate) deflections and/or reflections at the outlet 23 that can cause bubbles in the biological sample. In the illustrated embodiment, the second guide curves 234 have a radius of curvature R₃ that is smaller than the radius of curvature R₀ of the first guide curves 214, allowing for a relatively quick transition between the cavity 22 and the outlet 23. Further, the second slanting surface sections 233 are at an angle with respect to the first axis A₁ such that the outlet 23 narrows between the second guide curves 234 and the terminal end 232. The narrowing shape of the outlet 23 can help reduce a speed of air discharge from the outlet and produce a damping effect on the middle portion of the biological sample. The damping effect can help control a speed of the middle portion relative to the lateral portions to improve a synchronicity of the arrival at the outlet 23, help reduce deflections at the outlet 23, and/or help reduce the impact of collisions as the middle portion rejoins the lateral portions.

Additional details on aspects of the present disclosure are discussed below. These details are provided to enable a better and more thorough understanding of the presently disclosed techniques that can be implemented on a test slide, such as a test slide having a well like the well 201 discussed below.

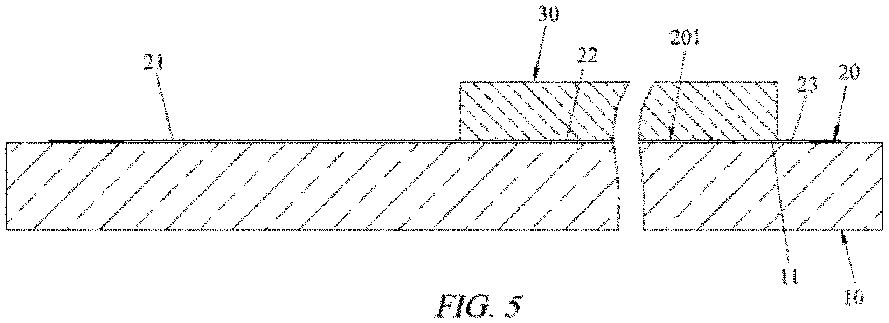

Referring to FIGS. 2, 4, and 5 collectively, when the cover slip 30 is properly mounted on the spacer layer 20 (e.g., in a proper position and properly attached), the cover slip 30 closes the cavities 22 while leaving a portion of each inlet 21 and outlet 23 are left uncovered. As illustrated in the partially schematic cross-section of FIG. 5, the cover slip 30 leaves a larger portion of the inlet 21 uncovered than the outlet 23. The illustrated alignment allows an operator to more easily inject a liquid-state biological sample (e.g., blood, semen, saliva, and/or any other suitable biological sample) into the inlet 21. Further, the illustrated alignment contributes to a capillary effect on the biological sample that helps gradually spread the biological sample from the inlet 21 toward the corresponding outlet 23 and along the spreading direction X.

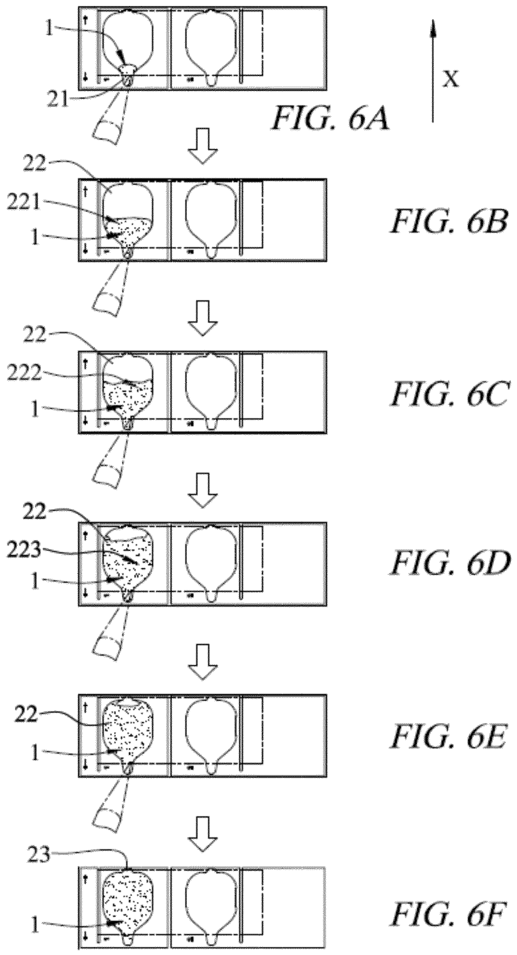

The various stages of the injection process are illustrated in the partially schematic top views FIGS. 6A-6F. Referring to FIG. 6A in conjunction with FIG. 4, a biological sample 1 can be injected into the inlet 21 (e.g., by an operator). Once injected, the biological sample 1 not only spreads in the spreading direction X but is also guided and/or directed in the transverse direction Y. For example, because the first slanting surface sections 213 of the inlet 21 are slanted (e.g., angled) away from the first axis A₁, the first slanting surface sections 213 can help spread the biological sample in the transverse direction Y ahead of the first guide curves 214. In turn, the movement in the Y direction upstream from the first guide curves 214 can help improve a wetting effect between the biological sample 1 and the sidewalls 210 as the biological sample moves along and downstream from the first guide curves 214. As a result, the first slanting surface sections 213 can help direct the biological sample 1 toward the first guide surfaces 224, thereby reducing the chance bubbles form at the first inflection point in the well 201.

Referring to FIG. 6B in conjunction with FIG. 4, the biological sample 1 enters the front section 221 of the corresponding cavity 22 and spreads in both the spreading direction X and the transverse direction Y to maintain contact with the first guiding sections 226 of the sidewalls 210. However, the spreading path of the lateral portions of the biological sample 1 (e.g., the portions that spread along the first guiding sections 226) is longer than the spreading path of the middle portion of the biological sample 1. As a result, the middle portion of the biological sample 1 forms a convex leading edge by spreading ahead of the lateral portions of the biological sample 1. However, the wetting phenomenon between the lateral portions and the biological sample helps accelerate the lateral portions of the biological sample in the front section 221 of the cavity such that the lateral portions spread at a higher speed along the first guiding sections 226 than the middle portion spreads along the first axis A₁.

Referring to FIG. 6C in conjunction with FIG. 4, when the biological sample 1 enters the middle section 222 of the cavity 22, the first concave curves 225 guide the biological sample 1 onto the inner surfaces 227 smoothly, preventing the biological sample 1 from being paused by vertexes (e.g., angled inflection points) that can cause deflections and/or reflections. Because the lateral portions of the biological sample 1 are flowing faster than the middle portion, the absence of a pause allows the lateral portions to spread ahead of the middle portion of the biological sample 1 while spreading along the inner surfaces 227. As a result, the leading edge of the middle portion of the biological sample 1 is flattened and then turned into a concave leading edge.

Referring to FIG. 6D in conjunction with FIG. 4, when the biological sample 1 enters the rear section 223 of the corresponding cavity 22, the second concave curves 229 of the corresponding second guide surfaces 228 help guide the biological sample 1 onto the second guiding sections 220 smoothly, preventing the biological sample 1 from being paused by vertexes (e.g., angled inflection points) that can cause deflections and/or reflections. As a result, the lateral portions of the biological sample 1 can keep flowing along the second guide surfaces 228 ahead of, and with an increasing lead over, the middle portion of the biological sample 1. The increasing lead causes the concavity of the concave leading edge of the biological sample 1 to increasingly pronounced. The increasing lead is advantageous to filling the cavity because a concave the leading edge can produce a door closing (or enclosing) effect at the outlet 23 that dampens the speed of the biological sample 1 overall and helps reduce the chance that bubbles are formed in the cavity 22. However, as discussed above, the second concave curves 229 and second guide surfaces 228 can also help decelerate the lateral portions (e.g., in addition to the door closing effect) to help reduce an impact of collisions near the outlet 23.

Referring to FIG. 6E in conjunction with FIG. 4, the shape of the well 201 causes the lateral portions of the biological sample 1 and the middle portion of the biological sample 1 to flow generally perpendicularly to each other adjacent to the outlet because the second guiding sections 220 are generally perpendicular to the spreading direction X. As a result, the lateral portions converge generally perpendicularly on the middle portion adjacent outlet, thereby producing the door closing (or enclosing) effect at the leading edge of the biological sample 1 as it exits the cavity 22. Further, the convergence helps decelerate the spread of the middle portion of the biological sample 1, thereby reducing a risk that the DNA in the biological sample 1 is broken and/or destroyed in collisions. Still further, the convergence also helps prevent the formation of vacuum bubbles on the two lateral sides of the cavity 22 by preventing the middle portion of the biological sample 1 from spreading into the outlet 23 sooner than the lateral portions of the biological sample 1.

Referring to FIG. 6F in conjunction with FIG. 4, after the convergence, the biological sample 1 flows into the outlet 23. As illustrated, the shape of the well 201 and the effects of the shape discussed above can reduce (or, in some cases, eliminate) the chance that bubbles form in the cavity 22 during the flowing process and/or that collisions destroy DNA information. As a result, the shape of the well 201 can help improve the chances that the biological sample flowed into the cavity 22 are usable by further processes.

That is, the shape and/or contours of a well 201 according to embodiments of the present disclosure can prevent bubbles from forming while a biological sample 1 is being injected into the cavity 22 (e.g., flowing from the inlet 21 toward the outlet 23). As a result, a better testing effect can be achieved than with conventional test slides, such as those discussed above with reference to FIG. 1. For example, with each first guide surface 224 including the first concave curve 225 and the corresponding first guiding section 226 extending from the corresponding first concave curve 225 toward the corresponding inlet 21, the lateral portions of the biological sample 1 can be guided smoothly without being paused by vertexes (e.g., angled inflection points) that can cause deflections and/or reflections. The biological sample 1, as a result, will be guided onto the inner surfaces 227 of the middle section 222 of the cavity 22 rapidly. Additionally, or alternatively, with each second guide surface 228 having the corresponding second concave curve 229 and the corresponding second guiding section 220 extending from the corresponding second concave curve 229 toward the corresponding outlet 23, the lateral portions of the biological sample 1 can be efficiently brought together (e.g., converged to the center) in advance to reduce the flow speed of the biological sample 1. For example, the convergence of the lateral portions of the biological sample 1 produces a damping effect that protects the DNA in the biological sample 1 from being broken by collisions between the lateral portions of the biological sample 1 and the middle portion of the biological sample 1. Additionally, or alternatively, the damping effect can help prevent the formation of vacuum bubbles on the lateral sides of the cavity 22 (e.g., as can otherwise occur when the middle portion of the biological sample 1 flows to the outlet 23 before the lateral portions of the biological sample 1 reach the outlet 23).

### Examples

The present disclosure is illustrated, for example, according to various aspects described below. Various examples of aspects of the present disclosure are described as numbered examples (1, 2, 3, etc.) for convenience. These are provided as examples and do not limit the present disclosure. It is noted that any of the dependent examples can be combined in any suitable manner, and placed into a respective independent example. The other examples can be presented in a similar manner.
1. A biological sample testing device, comprising:
   a slide having a top side;
   a cover slip carried by the top side of the slide; and
   a spacer layer carried by the top side of the slide and positioned between the top side and the cover slip, wherein the spacer layer includes a well extending horizontally along a first axis from an inlet at a first side of the biological sample testing device to an outlet at a second side of the biological sample testing device opposite the first side, wherein the well is defined by a set of curved sidewalls extending between the inlet and the outlet, and wherein the set of curved sidewalls define an asymmetric shape about a second axis perpendicular to the first axis.
2. The biological sample testing device of example 1 wherein the well is symmetric about the first axis.
3. The biological sample testing device of any of examples 1 and 2 wherein the well comprises:
   a front section downstream from the inlet;
   a middle section downstream from the front section; and
   a rear section downstream from the middle section, wherein the rear section has a larger aperture than the front section.
4. The biological sample testing device of any of examples 1-3 wherein:
   the well provides a first travel path from the inlet to the outlet adjacent to the set of sidewalls and a second travel path from the inlet to the outlet along a line between the inlet and the outlet; and
   the well is shaped to control a speed of a biological sample moving from the inlet to the outlet so that a first portion of the biological sample moving along the first travel path arrives at the outlet at generally the same time as a second portion of the biological sample moving along the second travel path.
5. The biological sample testing device of any of examples 1-4 wherein:
   the well includes a front section downstream from the inlet, a middle section downstream from the front section, and a rear section downstream from the middle section; and
   when a biological sample is injected into the inlet:
      the front section is shaped to accelerate a first portion of the biological sample moving adjacent to the set of sidewalls relative to a second portion of the biological sample moving directly between the inlet and the outlet; and
      the rear section is shaped to decelerate the first portion of the biological sample relative to the second portion of the biological sample.
6. The biological sample testing device of any of examples 1-5 wherein the inlet is at least partially defined by a pair of guide surfaces at a non-zero angle with respect to each other, and wherein the non-zero angle is configured to accelerate a biological sample input into the well toward the set of sidewalls in the well.
7. The biological sample testing device of example 6 wherein the pair of guide surfaces is a first pair of guide surfaces, and wherein the outlet is at least partially defined by a second pair of guide surfaces that are generally parallel to each other.
8. The biological sample testing device of any of examples 1-7 wherein the well is shaped to control a wetting phenomenon between a biological sample inserted through the inlet and the spacer material to cause a first portion of the biological sample flowing adjacent to the set of sidewalls to reach the outlet at generally the same time as a second portion of the biological sample flowing directly between the inlet and the outlet.
9. The biological sample testing device of any of examples 1-8 wherein:
   the well includes a front section downstream from the inlet, a middle section downstream from the front section, and a rear section downstream from the middle section; and
   the set of curved sidewalls include a first portion between the inlet and the front section and having a first convex profile, a second portion between the front section and the middle section and having a first concave profile, a third portion between the middle section and the rear section and having a second concave profile, and a fourth portion between the rear section and the outlet and having a second convex profile.
10. The biological sample testing device of example 9 wherein the first concave profile has a first radius of curvature, and wherein the second concave profile has a second radius of curvature smaller than the first radius of curvature.
11. The biological sample testing device of any of examples 9 and 10 wherein the first convex profile has a first radius of curvature, and wherein the second convex profile has a second radius of curvature different from the first radius of curvature.
12. The biological sample testing device of any of examples 1-11 wherein the spacer layer comprises a hydrophobic oil paint.
13. The biological sample testing device of any of examples 1-12 wherein:
   the well includes a front section fluidly coupled to the inlet, a middle section fluidly coupled to the front section, and a rear section fluidly coupled between the middle section and the outlet;
   the set of curved sidewalls at the front section include a first pair of guide surfaces positioned at a first angle to each other; and
   the set of curved sidewalls at the rear section include a second pair of guide surfaces positioned at second angle to each other, wherein the second angle is larger than the first angle.
14. The biological sample testing device of example 13 wherein the first angle is between 90 and 110 degrees.
15. The biological sample testing device of any of examples 13 and 14 wherein the second angle is between 140 and 180 degrees.
16. The biological sample testing device of any of examples 1-15 wherein the well is a first well, and wherein the spacer layer further includes a second well extending horizontally along a third axis from a second inlet at the first side of the cover slip to a second outlet at the second side of the cover slip, wherein the second well is defined by a second set of curved sidewalls extending between the second inlet and the second outlet, and wherein the second set of curved sidewalls define an asymmetric shape about a fourth axis perpendicular to the third axis.
17. The biological sample testing device of any of examples 1-16 wherein the set of curved sidewalls define an apple-shaped perimeter for the well.
18. The biological sample testing device of any of examples 1-16 wherein the set of curved sidewalls define a tear-shaped perimeter for the well.
19. A biological sample testing slide, comprising:
   a well extending horizontally along a first axis from an opening at a first side of the biological sample testing slide to a vent at a second side of the biological sample testing slide opposite the first side, wherein the well includes a middle section between the opening and the vent, and wherein the well is defined by a set of sidewalls extending between the opening and the vent, the set of sidewalls comprising:
      a first portion in the middle section, the first portion having a first concave curved profile; and
      a second portion in the middle section downstream from the first portion with respect to the opening, the second portion having a second concave curved profile different from the first concave curved profile.
20. The biological sample testing slide of example 19 wherein the set of sidewalls further comprise:
   a third portion between the opening and the middle section, the third portion having a first convex curved profile; and
   a fourth portion between the middle section and the vent, the fourth portion having a second convex curved profile different from the first convex curved profile.
21. The biological sample testing slide of any of examples 19 and 20 wherein the first concave curved profile has a first radius of curvature, and wherein the second concave curved profile has a second radius of curvature smaller than the first radius of curvature.
22. The biological sample testing slide of any of examples 19-21 wherein first portion includes a first set of guide surfaces positioned at a first angle to each other, wherein the second portion includes a second set of guide surfaces positioned at a second angle to each other, and wherein the second angle is larger than the first angle.
23. A slide for testing biological samples, the slide comprising:
   a slide backing;
   a cover slip carried by the slide backing; and
   a spacer layer carried by the slide backing and positioned between the slide backing and the cover slip, wherein the spacer layer includes a well extending horizontally along a first horizontal axis from an inlet at a first side of the slide to an outlet at a second side of the slide opposite the first side, and wherein the well is asymmetric about a second horizontal axis perpendicular to the first horizontal axis.
24. The slide of example 23 wherein the well is defined by a set of sidewalls extending between the inlet and the outlet, and wherein the set of sidewalls do not include an angled interface.
25. The slide of example 24 wherein the set of sidewalls comprise a first portion between the inlet and a middle section of the well and having a first convex profile, a second portion in the middle section and having a first concave profile, a third portion in the middle section and having a second concave profile, and a fourth portion between the middle section and the outlet and having a second convex profile.
26. A biological sample testing device, comprising:
   a microscope slide including a top side;
   a spacer layer provided on the top side and including a well, wherein the well has a suction opening, a cavity in communication with the suction opening, and a vent in communication with the cavity, the vent and the suction opening are provided opposite each other along a spreading direction, the cavity has a front section in communication with the suction opening and located on an inner side of the suction opening along the spreading direction, a middle section in communication with the front section and located on an inner side of the front section along the spreading direction, and a rear section between the middle section and the vent, the front section is defined by a pair of first guide surfaces, the first guide surfaces are provided opposite each other and spaced apart along a transverse direction perpendicular to the spreading direction, each of the first guide surfaces has a first concave curve and a first guiding section extending from the first concave curve toward the suction opening, the first guiding sections form a first angle therebetween, the rear section is defined by a pair of second guide surfaces, the second guide surfaces are provided opposite each other and spaced apart along the transverse direction, each of the second guide surfaces has a second concave curve and a second guiding section extending from the second concave curve toward the vent, the second guiding sections form a second angle therebetween, the second angle is larger than the first angle, and the second angle is in a range from 140 degrees to 180 degrees; and
   a cover slip provided on the spacer layer, spaced apart from the microscope slide, and closing the cavity.
27. The biological sample testing device of example 26, wherein the second guiding sections of the second guide surfaces of the spacer layer extend along the transverse direction, the second angle is substantially 180 degrees, and the second guiding sections are substantially perpendicular to the spreading direction.
28. The biological sample testing device of example 27, wherein the middle section of the spacer layer is defined by a pair of inner surfaces, and the inner surfaces are substantially parallel to the spreading direction.
29. The biological sample testing device of any of examples 26-28, wherein the suction opening of the spacer layer is defined by a pair of front guide surfaces and an end surface connected between corresponding ends of the front guide surfaces, each of the front guide surfaces has a first slanting surface section and a first guide curve connected between the first slanting surface section and a corresponding said first guiding section, and the first slanting surface sections are farther apart from each other when extending from the end surface toward the first guide curves in a corresponding manner.
30. The biological sample testing device of example 29, wherein the end surface of the suction opening of the spacer layer is curved.
31. The biological sample testing device of any of examples 29 and 30, wherein the vent of the spacer layer is defined by a pair of rear guide surfaces and a terminal end, each of the rear guide surfaces has a second slanting surface section and a second guide curve connected between the second slanting surface section and a corresponding said second guiding section, and the second slanting surface sections are farther apart from each other when extending from the terminal end toward the second guide curves in a corresponding manner.
32. The biological sample testing device of any of examples 26-31, wherein the first angle of the spacer layer is in a range from 90 degrees to 110 degrees.
33. The biological sample testing device of any of examples 26-32, wherein the first concave curve of each of the first guide surfaces of the spacer layer has a radius of curvature greater than a radius of curvature of the second concave curve of each of the second guide surfaces.
34. The biological sample testing device of any of examples 26-33, wherein the radius of curvature of the first concave curve of each of the first guide surfaces of the spacer layer is 6 mm, and the radius of curvature of the second concave curve of each of the second guide surfaces is 5 mm.

### Conclusion

According to the above, the biological sample testing device of the present invention has a simple structure as a whole and is indeed capable of achieving the objective of the invention, i.e., to solve the prior art problem that vacuum bubbles tend to be formed during the injection of a biological sample.

The foregoing is based on only one embodiment of the present invention, and the embodiment is not intended to be restrictive of the scope of the invention. Any equivalent change or modification that is made according to the appended claims and the contents of this specification shall be viewed as falling within the scope of the invention patent protection sought by the applicant. That is, it will be appreciated that specific embodiments of the disclosure have been described herein for purposes of illustration, but well-known structures and functions have not been shown or described in detail to avoid unnecessarily obscuring the description of the embodiments of the present disclosure. To the extent any material incorporated herein by reference conflicts with the present disclosure, the present disclosure controls. Where the context permits, singular or plural terms may also include the plural or singular term, respectively. Moreover, unless the word "or" is expressly limited to mean only a single item exclusive from the other items in reference to a list of two or more items, then the use of "or" in such a list is to be interpreted as including (a) any single item in the list, (b) all of the items in the list, or (c) any combination of the items in the list. Furthermore, as used herein, the phrase "and/or" as in "A and/or B" refers to A alone, B alone, and both A and B. Additionally, the terms "comprising," "including," "having," and "with" are used throughout to mean including at least the recited feature(s) such that any greater number of the same features and/or additional types of other features are not precluded. Further, the terms "generally," "approximately" and "about" are used herein to mean within at least 10% of a given value or limit. Purely by way of example, an approximate ratio means within 10% of the given ratio.

From the foregoing, it will also be appreciated that various modifications may be made without deviating from the disclosed techniques. For example, one of ordinary skill in the art will understand that while a particular shape (e.g., an apple shape) has been discussed primarily herein as being defined by a set of sidewalls around each well, the set of sidewalls can define various other shapes without deviating from the scope of the present disclosure. Purely by way of example, the sidewalls can define a tear-shaped well that omits the straight sections (e.g., the inner surfaces 227 of FIG. 4) and instead transitions directly between a first concave curve to a second concave curve and/or has a singular concave curve that has a longer circumference. Further, various components of the present disclosure can be further divided into subcomponents, or that various components and functions of the present disclosure may be combined and integrated. For example, it will be understood that the angle of the front guiding sections can be generally similar to the angle of the first guide surfaces such that the inlet is generally continuous with the front section of the cavity. In addition, certain aspects of the present disclosure described in the context of particular embodiments may also be combined or eliminated in other embodiments.

Furthermore, although advantages associated with certain embodiments of the present disclosure have been described in the context of those embodiments, other embodiments may also exhibit such advantages, and not all embodiments need necessarily exhibit such advantages to fall within the scope of the present disclosure. Accordingly, the disclosed techniques can encompass other embodiments not expressly shown or described herein.

## Claims

1. A biological sample testing device, comprising:
a slide having a top side;
a cover slip carried by the top side of the slide; and
a spacer layer carried by the top side of the slide and positioned between the top side and the cover slip, wherein the spacer layer includes a well extending horizontally along a first axis from an inlet at a first side of the biological sample testing device to an outlet at a second side of the biological sample testing device opposite the first side, wherein the well is defined by a set of curved sidewalls extending between the inlet and the outlet, and wherein the set of curved sidewalls define an asymmetric shape about a second axis perpendicular to the first axis.

2. The biological sample testing device of claim 1 wherein the well is symmetric about the first axis.

3. The biological sample testing device of claims 1 or 2 wherein the well comprises:
a front section downstream from the inlet;
a middle section downstream from the front section; and
a rear section downstream from the middle section, wherein the rear section has a larger aperture than the front section.

4. The biological sample testing device of any of claims 1 to 3 wherein:
the well provides a first travel path from the inlet to the outlet adjacent to the set of curved sidewalls and a second travel path from the inlet to the outlet along a line between the inlet and the outlet; and
the well is shaped to control a speed of a biological sample moving from the inlet to the outlet so that a first portion of the biological sample moving along the first travel path arrives at the outlet generally simultaneously with a second portion of the biological sample moving along the second travel path.

5. The biological sample testing device of any of claims 1 to 4 wherein:
the well includes a front section downstream from the inlet, a middle section downstream from the front section, and a rear section downstream from the middle section; and
when a biological sample is injected into the inlet:
the front section is shaped to accelerate a first portion of the biological sample moving adjacent to the set of curved sidewalls relative to a second portion of the biological sample moving directly between the inlet and the outlet; and
the rear section is shaped to decelerate the first portion of the biological sample relative to the second portion of the biological sample.

6. The biological sample testing device of any of claims 1 to 5 wherein the inlet is at least partially defined by a pair of guide surfaces at a non-zero angle with respect to each other, and wherein the non-zero angle is configured to accelerate a biological sample input into the well toward the set of curved sidewalls in the well.

7. The biological sample testing device of claim 6 wherein the pair of guide surfaces is a first pair of guide surfaces, and wherein the outlet is at least partially defined by a second pair of guide surfaces that are at a second non-zero angle with respect to each other, and wherein the second non-zero angle is configured to decelerate the biological sample arriving at the outlet.

8. The biological sample testing device of any of claims 1 to 7 wherein the well is shaped to control a wetting phenomenon between a biological sample inserted through the inlet and a material in the spacer layer to cause a first portion of the biological sample flowing adjacent to the set of curved sidewalls to reach the outlet generally simultaneously with a second portion of the biological sample flowing directly between the inlet and the outlet.

9. The biological sample testing device of any of claims 1 to 8 wherein:
the well includes a front section downstream from the inlet, a middle section downstream from the front section, and a rear section downstream from the middle section; and
the set of curved sidewalls include a first portion between the inlet and the front section and having a first convex profile, a second portion between the front section and the middle section and having a first concave profile, a third portion between the middle section and the rear section and having a second concave profile, and a fourth portion between the rear section and the outlet and having a second convex profile.

10. The biological sample testing device of claim 9 wherein the first concave profile has a first radius of curvature, and wherein the second concave profile has a second radius of curvature smaller than the first radius of curvature; and/or
wherein the first convex profile has a first radius of curvature, and wherein the second convex profile has a second radius of curvature different from the first radius of curvature.

11. The biological sample testing device of any of claims 1 to 10 wherein the spacer layer comprises a hydrophobic oil paint.

12. The biological sample testing device of any of claims 1 to 11 wherein:
the well includes a front section fluidly coupled to the inlet, a middle section fluidly coupled to the front section, and a rear section fluidly coupled between the middle section and the outlet;
the set of curved sidewalls at the front section include a first pair of guide surfaces positioned at a first angle to each other; and
the set of curved sidewalls at the rear section include a second pair of guide surfaces positioned at second angle to each other, wherein the second angle is larger than the first angle.

13. The biological sample testing device of claim 12 wherein the first angle is between 90 and 110 degrees; and/or
wherein the second angle is between 140 and 180 degrees.

14. The biological sample testing device of any of claims 1 to 13 wherein the well is a first well, and wherein the spacer layer further includes a second well extending horizontally along a third axis from a second inlet at the first side of the cover slip to a second outlet at the second side of the cover slip, wherein the second well is defined by a second set of curved sidewalls extending between the second inlet and the second outlet, and wherein the second set of curved sidewalls define an asymmetric shape about a fourth axis perpendicular to the third axis.

15. The biological sample testing device of any of claims 1 to 14 wherein the set of curved sidewalls define an apple-shaped perimeter for the well; or
wherein the set of curved sidewalls define a tear-shaped perimeter for the well.
